(19) Europäisches Patentamt
European Patent Office
Office européen des brevets

(11) **EP 1 816 448 A1**

(12) **EUROPEAN PATENT APPLICATION**

(43) Date of publication:
**08.08.2007 Bulletin 2007/32**

(51) Int Cl.:
***G01F 23/26*** *(2006.01)*

(21) Application number: **06425054.1**

(22) Date of filing: **02.02.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **S.I.E.M. S.r.l.**
**73100 Lecce (IT)**

(72) Inventor: **Aguglia, Jorge Miguel**
**73100 Lecce (IT)**

(74) Representative: **Robba, Pierpaolo**
**Interpatent**
**Via Caboto 35**
**10129 Torino (IT)**

(54) **Capacitive probe for detecting the level of electrically conductive substances, in particular liquids**

(57)     The present invention relates to a capacitive probe for detecting the level of electrically conductive substances, in particular liquids, in a container, comprising a first conductive element (23) having first connection means (31) connectable to a measuring device and arranged to realise a first plate of a capacitor, a dielectric element (21) having a predetermined dielectric constant, an electrically conductive substance that, in use, is substantially adhering to said dielectric element (21) along a height equivalent to the level of the substance to be detected. The dielectric element (21) is interposed between the first conductive element (23) and the substance so as to insulate it from the first conductive element. The probe comprises, furthermore, a second conductive element (25) having second connection means (51) connectable to the measuring device and that, in use, is directly electrically connected to the substance whereby the substance is arranged to realise a second plate of the probe allowing to detect different capacities as the level of the substance in the container changes. The invention relates also to a capacitive sensor comprising the probe and to a method for realising a capacitive probe.

FIG. 1

## Description

## Technical Field

The present invention relates, in general, to capacitive probes arranged for detecting the level of electrically conductive substances, as for instance electrically conductive liquids like surface runoff or sewage (waste waters) .
In particular, the present invention relates to a probe to be applied to measurement instruments configured for using capacitive probes.

## Background Art

Capacitive type probes are known for detecting the level of electrically conductive substances.
For instance from publication GB_820245 a capacitive probe for electrically conductive liquids is known. Such a known probe comprises two electrodes electrically isolated from the substance the level of which must be measured, having such electrodes a cylindrical shape and being arranged to realise respective plates of a capacitor.
The two plates, which are concentric and vertically placed into the container, are arranged to define a volume between the two cylinders in which the electrically conductive liquid can enter through a pierced cap placed at the base. The level of the liquid is apt to determine the capacity between the insulated plates, whereby any level variation of the liquid involves a linear variation of the probe capacity.
A first problem of such a background art is that, in use, it is necessary that the conductive liquid enters between the two insulated plates and comes out; it follows that, in the event of liquids having high viscosity, a difficult entry and outlet of the liquid can cause wrong measurements due, for instance, to obstructions in the pierced plug placed at the base.
A capacitive probe for solid or liquid substances is known from publication GB_1518818; the probe has a frusto-conical shape and is arranged to be inserted in a container in order to measure the level of the substances.
The probe comprises a first electrode, electrically insulated from the substance the level of which must be measured, shaped as a cup, placed to the end of the frusto-conical shaped probe and arranged to realise a first plate; the probe further comprises a second electrode, this too being electrically insulated from the substance the level of which must be measured, placed to the base of the frusto-conical shaped probe and arranged to realise a reference plate for determining the level measures.
The level variation of substances is determined on the basis of the capacity variation between the two plates in accordance with the variation of the level of the substance adhering to the truncated cone.
Such a background art solves the problem of possible obstructions to which the first example of background art is exposed due to the lack of inner cavities, but, because of the frusto-conical shape of the probe and of the insulated plates, the known capacitive probe does not have a linear behaviour upon the variation of the level of the substances in the container contacting the truncated cone.
In summary, Applicant finds that the background art in the field of capacitive probes for measuring the level of electrically conductive substances refers either to probes having linear behaviour but unreliable in time, or probes reliable in time but not having linear behaviour.

## Disclosure of the Invention

Object of the present invention is a capacitive probe that at the same time shows a linear behaviour when measuring the level of electrically conductive substances and that does not involve reliability problems in time.
Such an object is achieved by the capacitive probe for containers of electrically conductive substances, in particular liquids, as claimed.
The present invention relates also to a capacitive sensor comprising the probe according to the invention and to a method for realising a capacitive probe arranged to measure the level of conductive substances in containers as claimed. The Claims are an integral part of the teaching of the present invention.
According to a preferred feature of the present invention the probe comprises a conductive element that, in use, comes into direct contact with the electrically conductive substance so that the substance itself realises one of the plates of the capacitive probe.
According to a further feature of the present invention the probe, in a first embodiment, is shaped as a closed cylinder and comprises a dielectric element having internally a conductive element adhering to the dielectric element.
According to another feature of the present invention, the probe, in a second embodiment, uses one of the walls of the container for realising plate and dielectric of the capacitive probe.

## Brief Description of Drawings

These and further features and advantages of the present invention will appear more clearly from the following detailed description of preferred embodiments, provided by way of non-limiting examples with reference to the attached drawings, in which components designated by same or similar reference numerals indicate components having same or similar functionality and construction and wherein:

Fig. 1 shows a perspective view in section of the probe according to the invention in a first embodiment;

Figures 2a and 2b schematically show the probe of Fig. 1 in use connected to a measuring device;
Fig. 3 schematically shows a probe according to the invention in a second embodiment.

## Best mode for Carrying Out the Invention

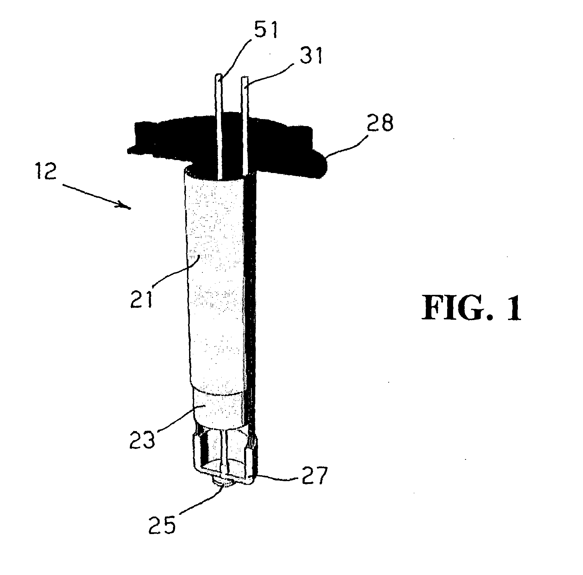

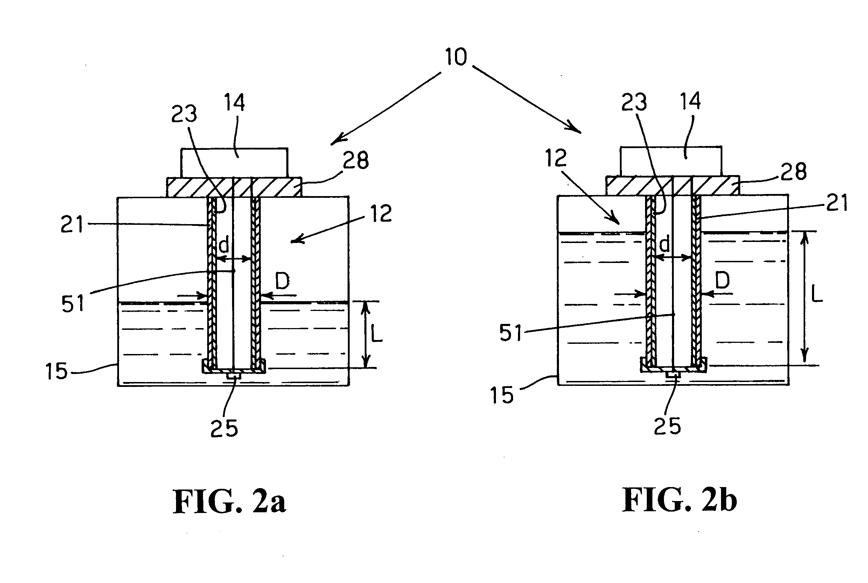

With reference to Fig. 1 a capacitive probe (probe) 12 for detecting the level of electrically conductive substances in a container or tank 15, according to a first embodiment of the present invention, comprises a tubular dielectric element 21, having a predetermined dielectric constant, a tubular conductive element (first conductive element) 23, inserted inside the dielectric element and, preferably, in contact with the dielectric element 21, and a conductive element (second conductive element) 25, preferably having a punctiform surface, placed at a first end of the tubular elements, 21 and 23, and insulated therefrom, 21 and 23. In particular, the tubular dielectric element 21, preferably having a circular cross-section, is made, for instance, of a plastic tube, for example in PVC ($\varepsilon$ = 3,5 F/m) or other materials like teflon ($\varepsilon$ = 2-2,8 F/m), polycarbonate ($\varepsilon$ = 2,8-3 F/m), polyester ($\varepsilon$ = 2.8-4.5 F/m), etc. and is arranged to act as a container of the tubular conductive element 23 and to electrically isolate it from the substance.
The tubular conductive element 23, for instance, is made of a hard-drawn brass sheet or of a thin wall metallic tube inserted inside the tubular dielectric element (tube) 21; the tubular conductive element (sheet) 23, has, for instance, a thickness of 0,1 mm or a thickness chosen at will and compatible with the dimensions of the tube 21, and, preferably, is of sufficient dimensions to cover the inner surface of the tube 21 along its entire length.
The conductive element 25, preferably, is realised by means of a pin or of a nail-head made of metal, for instance of nickel-plated brass and, in the preferred embodiment, has a shape like that of a jeans button. The conductive element (pin) 25, preferably, is fixed to the first end of tube 21 by means of a fastening device 27.
Such a fastening device 27, made of insulating material, for instance plastic as polycarbonate or nylon, has, preferably, the shape of a plug having in the centre a hole of a diameter apt to ensure a water-tight joint to the pin 25.
The fastening device (plug) 27 is shaped so as to be fixed, for instance by means of suitable slots, known per se, to the end of tube 21 and is arranged not only to fix the pin 25 to the first end of tube 21, but also to ensure that the substance the level of which is to be detect does not enter into the cavity realised by the sheet 23, i.e. that the substance does not enter inside the probe 12.
In the above described probe 12, the sheet 23, as easily comprehensible to a technician in the field, is arranged to define a first plate of the capacitive component or capacitor having variable capacity and the pin 25 is arranged to realise the second capacitor plate, by co-operating, as it will be disclosed later on in detail, with the electrically conductive substance the level of which is to be measured.
The probe 12 further comprises, for instance, a first wire 31 made of electrically conductive material welded to the sheet 23 and a second wire 51, this, too, being made of electrically conductive material welded or fixed to the pin 25; the first and second wire, 31 and 51, are shaped so as to come out, for instance, from the second end of probe 12 for allowing to electrically connect the probe 12 to a measuring device 14 (Fig. 2), of known type, arranged to measure the different capacities detected by the probe 12 by means of the two plates, as it will be disclosed later on in detail.
Moreover, the probe 12 also comprises a flange 28 (Fig. 1, Fig. 2, Fig. 3), of known type, associated to the second end of the probe 12 and arranged to fasten the probe to the container 15 of conductive substances; the flange 28 is shaped so as to allow the coming out of wires 31, 51 connected to the plates.
The probe 12, as described, connected by means of wires 31, 51 to the measuring device 14, is arranged to realise a capacitive sensor 10 for measuring the level of conductive substances in a container.
In particular, the capacity can be determined, when the level of the conductive substance (liquid) in contact with the dielectric element 21 of probe 12 changes, on the basis of the known function:

$$C = \frac{\pi \varepsilon L (D + d)}{2(D - d)}$$

wherein:

L is the level of the liquid as to the first end of the probe;
D is the external diameter of tube 21 and corresponds to the surface in contact with the liquid;
d is the inner diameter of tube 21 and corresponds to the surface in contact with the sheet 23;
$\varepsilon$ is the dielectric constant of the material whereof the tube 21 is made; and

$$(D - d) \ll d/2.$$

In summary, according to the first embodiment, the probe 12 takes advantage of the electrical conductivity of the liquid in the container or tank for realising the second plate of the capacitor; as a matter of fact, the liquid, by wetting the second conductive element (pin) 25 placed at the first end (base) of the tube 21, transmits the electrical contact present at the base of the tube to the whole liquid, this latter, by adhering to the dielectric element 21, realises in this way the second plate of the capacitor or probe 12.
According to a second embodiment of the present invention the probe can be realised by using the container or tank as a probe.

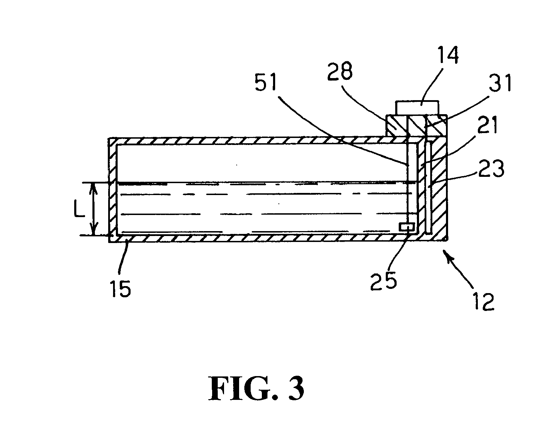

In such a second embodiment it is provided that the container is made of an insulating material and that a side-wall of the same container is used as a dielectric element 21 (Fig. 3); in such an embodiment it is provided that a flat conductive element 23, for instance an adhesive metal sheet or an adhesive metal strap, is applied adjacent to the side-wall so that it is in any case insulated from the substance; moreover it is provided that, for instance, a wire 51 is inserted from the upper wall of the tank; the wire, for instance of brass, connected to a conductive element 25, for instance a weight made of brass and having the same function as the conductive element already described, is arranged to be placed to the base of the tank by means of the wire 51 and to remain placed in presence of the substance. In such an embodiment a flat capacitor is obtained in which the capacity, as easily comprehensible to a technician in the field, varies linearly upon variation of the liquid level; also in this second embodiment, the liquid, by adhering to the side-wall, is arranged to realise the second plate of a capacitor.

Obviously, also in this second embodiment the presence of elements that are equivalent to those already described is provided, as, for instance, wires 31 and 51, flange 28 and measuring device 14.

The capacity variations when the level L of the liquid changes, both in the first and in the second embodiment, may be measured by means of measuring devices 14, of known type, being, for instance, of the following kinds:

- amplitude modulation devices;
- frequency modulation devices;
- fixed frequency devices measuring a duty cycle of an output signal;
- devices having LRC resonator circuits;
- devices having Lion double T circuits.

The operation of the probe 12 and capacitive sensor 10 as described above in the first embodiment is the following, although nothing changes in case of the second exemplary embodiment.

The probe 12 is fastened, for instance, by means of the flange 28 associated thereto, to the top of the tank 15 and in vertical position.

A measuring device 14 is connected to the end of wires 31 and 51 so as to realise a capacitive sensor 10 arranged to transform the capacity detected by the probe 12 into electrical voltage or current signals corresponding to the detected capacity.

The probe 12, so positioned, is arranged to detect the filling level of the conductive substance in the container; as a matter of fact, the conductive substance, after having wetted the second conductive element 25, by externally adhering to the dielectric element is arranged to realise, being electrically conductive, the second plate of a cylindrical capacitor.

Level variations of the substance are detected as L variations of the capacitor and, therefore, are apt to determine a linear variation of the capacity C of the probe 12. By means of wires 31 and 51, variations of capacity C are detected by the measuring device 14 and, for instance, displayed by a display instrument connected thereto or integrated therein.

The probe 12, as described, "is wetted" only externally by the conductive substance and, therefore, the in time operation reliability is granted also in the event, for instance, of particularly viscous surface runoff or sewage.

The probe 12 has been described, in the different embodiments, by providing the use of a first conductive element or plate shaped so as to completely cover the dielectric element; although the above embodiment is preferred, in other embodiments the first plate may be shaped so as to not completely cover the dielectric element; in such a case a general reduction of the detected maximum capacitive value and a non linear response of the probe are obtained.

According to further embodiments, in particular to embodiments similar to the first embodiment, the cross-section of the tube 21 and of the first conductive element 23 in contact thereto, which is preferably circular, may also be elliptic or polygonal, without departing from the scope of the above description. Moreover, the pin 25 according to the first embodiment may also extend along the entire plug 27 or along a part thereof or may also replace it; in such a case the plug is shaped so that the inner surface thereof is made of an insulating material and the external surface is made of a conductive material.

In the different exemplary embodiments, the probe has been shown positioned to the top of the tank. Obviously, in other embodiments, the probe and/or the measuring device may also be positioned to the base of the tank, without departing from the above description.

Obviously, without prejudice to the basic principles of the present invention, the details and embodiments may vary, also significantly, with respect to what has been described herein by way of example only, without departing from the scope of the invention as defined by the claims that follow.

**Claims**

1. Capacitive probe for detecting the level of electrically conductive substances, in particular liquids, in a container (15), comprising

 - a first conductive element (23) having first connection means (31) connectable to a measuring device (14) and arranged to realise a first plate of a capacitor;
 - a dielectric element (21) having a predetermined dielectric constant;
 - an electrically conductive substance that, in use, is substantially adhering to said dielectric element (21) along a height equivalent to the level of the substance to be detected, said dielectric element (21) being interposed between said first conductive element (23) and said substance;

**characterised by**

- a second conductive element (25) having second connection means (51) connectable to the measuring device (14) and that, in use, is directly electrically connected to said substance, whereby said substance is arranged to realise a second plate of said probe.

2. Probe according to claim 1 **characterised in that** said first conductive element (23) is made of a metal sheet adhering to said dielectric element (21).

3. Probe according to claim 1 or 2 **characterised in that** said dielectric element (21) is cylindrically shaped and is arranged to contain said first conductive element (23).

4. Probe according to the claim 3 **characterised by**

- a fastening device (27) positioned at a first end of said dielectric element and shaped so as to fix said second conductive element (25) to said first end and to prevent the substance from penetrating the probe (12).

5. Probe according to claim 3 or 4 **characterised by** a flange (28) associated to a second end of said dielectric element and arranged to fasten said probe (12) to said container.

6. Probe according to the claim 1 or 2 **characterised in that** said dielectric element (21) has a flat shape.

7. Probe according to claim 6 **characterised in that** said second conductive element (25) is positioned to the base of said container.

8. Capacitive sensor comprising a measuring device (14) and **characterised by** a capacitive probe (12) as claimed in claims 1 to 7 connected to said measuring device (14) by means of first and second connection means (31, 51) whereby said measuring device is arranged to detect through said first and second connection means different capacities as the level of said substance adhering to said dielectric element (21) changes.

9. Method for realising a capacitive probe for detecting the level of electrically conductive substances, in particular liquids, in a container (15), said probe comprising a first conductive element (23) arranged to realise a first plate of a capacitor and a dielectric element (21) having a predetermined dielectric constant and interposed, in use, between said first conductive element (23) and said substance that is arranged to adhere to said dielectric element (21) along a height equivalent to the level of the substance to be detected;
**characterised by** the step of

- using said conductive substance as a second plate by directly electrically connecting said substance to a second conductive element (25).

10. Method according to claim 9 **characterised by** the further step of

- detecting by means of first connection means (31) associated to said first conductive element (23) and second connection means (51) associated to said second conductive element (25) and connected to a measuring device (14) different capacities as the level of said substance adhering to said dielectric element (21) changes.

FIG. 1

FIG. 2b

FIG. 2a

**FIG. 3**

**European Patent Office**

**EUROPEAN SEARCH REPORT**

Application Number

EP 06 42 5054

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 3 475 960 A (BERNARD J. MILLER) 4 November 1969 (1969-11-04) * column 2, line 61 - column 4, line 66; figures 1-4 * | 1-3,5,6, 8-10 | INV. G01F23/26 |
| X | US 4 389 900 A (GUTIERREZ ET AL) 28 June 1983 (1983-06-28) * column 2, line 36 - column 5, line 13; figures 1-4,6 * | 1,3-6, 8-10 | |
| X | US 2005/109682 A1 (MAZUREK NIEL ET AL) 26 May 2005 (2005-05-26) * paragraph [0022] - paragraph [0036]; figures 1-4,4A * | 1,3,5,6, 8-10 | |
| A | US 4 503 383 A (AGAR ET AL) 5 March 1985 (1985-03-05) * column 1, line 41 - column 4, line 64; figures 1-4 * | 4 | |

TECHNICAL FIELDS
SEARCHED    (IPC)

G01F

The present search report has been drawn up for all claims

| Place of search | Date of completion of the search | Examiner |
|---|---|---|
| Munich | 17 July 2006 | Feldhoff, R |

EPO FORM 1503 03.82 (P04C01)

**ANNEX TO THE EUROPEAN SEARCH REPORT**
**ON EUROPEAN PATENT APPLICATION NO.**                    EP 06 42 5054

This annex lists the patent family members relating to the patent documents cited in  the above-mentioned European search report.
The members are as contained in the European Patent Office EDP file on
The European Patent Office is in no way  liable for these particulars which are merely  given for the purpose of information.

17-07-2006

| Patent document cited in search report | | Publication date | Patent family member(s) | | Publication date |
|---|---|---|---|---|---|
| US 3475960 | A | 04-11-1969 | NONE | | |
| US 4389900 | A | 28-06-1983 | NONE | | |
| US 2005109682 | A1 | 26-05-2005 | NONE | | |
| US 4503383 | A | 05-03-1985 | DE | 3363836 D1 | 10-07-1986 |
| | | | EP | 0084405 A1 | 27-07-1983 |
| | | | JP | 58129220 A | 02-08-1983 |

For more details about this annex : see Official Journal of the European Patent Office, No. 12/82